# FASCICULE DE BREVET EUROPEEN

(11) **EP 2 895 711 B1**
(45) Date de publication et mention de la délivrance du brevet: **19.07.2017**
(21) Numéro de dépôt: 13742146.7
(22) Date de dépôt: 17.06.2013
(51) Int. Cl.: F01L 9/02, F01L 9/04, F02B 75/18, F16C 1/20

(54) **SYSTÈME DE DISTRIBUTION DIRECTE POUR MOTEUR A COMBUSTION INTERNE**
VENTILANTRIEB MIT DIREKTER BETÄTIGUNG VON DER KURBELWELLE FÜR BRENNKRAFTMASCHINE
VALVE TRAIN DIRECTLY CONTROLLED BY THE CRANKSHAFT FOR INTERNAL COMBUSTION ENGINE

(30) Priorité: 18.06.2012 BE 201200403
(43) Date de publication de la demande: 22.07.2015
(73) Titulaire: Boeck, François, 18690 Almuñecar (ES)
(72) Inventeur: BOECK, François, B1210 Saint Josse ten Noode (Bruxelles) (BE); SANTIAGO MUÑOZ, Alfonso, 18697 La Herradura (Almuñecar) (ES)
(86) Numéro de dépôt international: PCT/BE2013/000029
(87) Numéro de publication internationale: WO 2013/188932

(56) Documents cités:
- WO-A1-01/40643
- WO-A1-2006/090174
- CH-A- 117 045
- DE-B- 1 002 563
- DE-U1- 20 308 989
- FR-A- 743 509
- FR-A- 941 789
- FR-A- 1 375 892
- GB-A- 754 998
- GB-A- 1 328 093
- US-A- 2 635 544
- US-A- 4 258 672
- US-A- 4 716 862

## Description

L'objet de cette invention est un système de moteur plus efficace dans l'utilisation des combustibles en simplifiant le système de distribution de tous les types de moteurs à combustion interne. Le système ne nécessite pas d'arbres à cames ou de taquets ni de roues de transmission, ou de chaîne de transmission, ni d'engrenages, ni de distribution desmodromique, ni de roulement mécanique intermédiaire ou de distribution par courroie. Ce système permet des moteurs plus légers avec des rendements plus élevés. Le système élimine les transmissions de distribution conventionnelles existantes actuellement dans les moteurs à combustion interne. Le système mécanique de distribution directe, qui est l'objet de l'invention, a une résistance minimale et une transmission minimale.

Ce système peut se concevoir comme un système d'information tirant parti du mouvement du vilebrequin afin de donner le temps des moteurs. Ce grâce à divers type de dispositifs notamment un dispositif de rotor attaché au et solidaire du vilebrequin qui contenu dans une enceinte actionne par son mouvement des poussoirs. Ces derniers donnant leur temps aux valves des pistons.

Le système permet par rapport aux moteurs actuels de produire des performances supérieures; une plus grande accélération et une dépense moindre en combustible avec moins de cylindres. La quantité de combustible nécessaire pour produire un travail égal au système actuel est beaucoup plus faible.

### Problème et domaine technique : Distribution dans les moteurs de combustion interne.

Les moteurs à combustion interne actuel nécessitent des systèmes de distribution relativement complexe, lourds et encombrant. Tel qu'arbres à cames, taquets, roues de transmission, chaîne de transmission, engrenages, distribution desmodromique, roulement mécanique intermédiaire, distribution par courroie. Des systèmes de distribution directe à partir du vilebrequin sont également connus: voir WO2006/090174 ou US4716862, ces systèmes étant à transmission hydraulique

### Avantage du système de distribution directe par rapport à l'état actuel de la technique

Le moteur démarre avec moins de tour du démarreur. Il démarre plus rapidement que les moteurs actuels. Ceci permet une économie de batterie, d'électricité. Ce qui permet d'user de batterie plus petite et moins puissante vu la plus faible consommation d'électricité au démarrage du moteur. Les pistons n'ont pas à faire bouger l'arbre à cames inexistant dans le système ce qui engendre moins de friction et moins de mécanismes: ils sont plus libres. Le moteur fournit par rapport aux systèmes existants plus de puissance (de chevaux). Le moteur à moins de transmission de pièces mobiles. Avec moins de transmission les temps seront plus rapides. Le cycle admission, compression, explosion, échappement est plus rapide. Cela implique une économie de carburant consommé. Si la distribution directe subit une avarie dans le circuit hydraulique, les vannes seront automatiquement fermées par les ressorts de soupape, supprimant les soupapes du cycle correspondant. Le système peut fonctionner sur trois cylindres. L'emplacement de l'avarie sera évident au vu de la perte de liquide dans la tuyauterie. La réparation ne nécessitera pas une nouvelle mise au point du moteur.

### Avantages de culasse.

Le système permet que les culasses soient situées dans une position plus basse par rapport aux moteurs existant actuellement. Comme la culasse est plus basse le liquide de refroidissement peut entrer avec une pression supérieure ce qui engendre un meilleur refroidissement. La position basse de la culasse rend plus difficile de l'avarier. Le système permet l'utilisation de soupapes et de ressorts plus petits. Ceci permet une économie de matériaux dans la construction des culasses, ressorts et soupapes.

### DESCRIPTION.

Figure
1:
Les numéros et références mis entre parenthèse dans la description et dans les revendications renvoient aux références entourées d'un cercle dans les figures.

### Composants du système.

### Composantes de la distribution directe.

### Rotor (1).

Le rotor (1) actionne le mécanisme qui ouvre et ferme les soupapes. Le rotor est constitué d'un mécanisme fixé directement sur le vilebrequin (2) par quatre boulons passant (2A). Le dit mécanisme est composé de deux cames (1A, 1B) superposées, courbées à leurs extrémités ou se distribue le mouvement des pistons en référence à l'ouverture des soupapes de culasse (3) par rapport aux temps du moteur (admission, compression, explosion, échappement). La partie de contact des deux cames (1A, 1B) est composé d'un matériau antifriction. Le rotor a un guide de réglage à vis (1C). Le rotor (1) agit également comme une pompe à graisse en diffusant par son mouvement l'huile sur les contacts entre lui et les poussoirs de rotor (5).

### Enceinte de rotor (4).

Il se compose d'une enceinte (4) elle-même composée de deux couvercles hermétiques: un antérieur (4A) et un postérieur (4B) dans lequel est logé le rotor (1). Un registre (4C) est attaché au couvercle antérieur (4A) par quatre vis de type 4F (4F). Seize vis (4D) joignant les deux couvercles hermétiques (4A et 4B) pour entourer le rotor (4). Quatre vis (4E) tenant une enveloppe le rotor (4) sur le bloc moteur. Deux vis (4F) servent de niveau et pour le remplissage et la vidange d'huile. Deux joints hermétiques (4G et 4H) joignent respectivement le couvercle antérieur (4A) et le couvercle postérieur (4B) avec l'enceinte du rotor (4). Un joint de registre (41) joint le registre (4C) avec l'enceinte du rotor (4). Le joint d'huile (4J) est situé dans le couvercle hermétique postérieur (4B). La dite enceinte (4) comprend huit pousseurs (5). Les pousseurs étant poussé par le rotor uni au vilebrequin transmettent un mouvement aux soupapes de culasse (3) par le biais des tuyaux de transmission (7). L'enceinte du rotor (4) est remplie d'une quantité d'huile d'environ 15% à 25% de son volume. Le registre (4C) sert à attacher la pompe à huile et des systèmes de transmission indirects (pompe à eau, alternateur, climatisation, direction assistée, servo-moteur).

### Poussoirs de rotor (5).

Un poussoir comprend un piston (5A), un poussoir (5B), un ressort (5C), deux rondelles (5D) et deux cavités (5E) dans lequel sont logés deux segments (5F). La partie de contact du piston du poussoir (5.B) est composée d'un matériel antifriction.

### Poussoirs de soupapes(6).

Sont les mêmes que les poussoirs du rotor la seule différence étant la forme de la tête du poussoir (6A). La partie de contact du poussoir (6A) est composée d'un matériel antifriction.

### Tuyau de transmission (7).

Un tuyau de transmission (7) se compose d'un tube souple (7A) et d'une rondelle de réglage (7B). Il y a huit tuyaux de même type, chacune reliant une soupape d'un poussoir de soupapes (6) à un poussoir de rotor (5). Les tuyaux de transmission sont remplis d'huile d'obus (7D) et/ou de billes (7C).

Pousseur par obus et/ou billes : Les tuyaux sont remplis d'obus (7D) et/ou de billes (7C) de diamètre correspondants au diamètre intérieur du tuyau et d'huile.

### Réglette (8).

La réglette est composée de huit cavités (8A) où sont logés les poussoirs de soupapes (6) qui sont attachés chacun par deux vis (6B) à la réglette (8) qui possède seize trous (8B). La réglette (8) est fixée par six vis (8C) qui la rend solidaire à la culasse. La réglette est perforée intérieurement par un système de lubrification (8D) qui a comme fonction de lubrifier les poussoirs de soupape (6).

### Mise au point de la distribution directe hydraulique.

Les moteurs actuels sont généralement mis au point dans l'ordre suivant qui est conservé dans le système de distribution directe hydraulique:
Par ordres des pistons (non représentés dans les dessins) : 1, 3, 4, 2.

Nous utilisons le même ordre d'allumage en gardant le même ordre d'ouverture des soupapes.

### Le cycle en distribution hydraulique directe.

Le cycle de d'ouverture des soupapes est donné par le rotor. Le cycle est le même que le cycle d'un moteur quatre-temps conventionnel. Dans le premier quart de tour du vilebrequin (0 à 90 degrés) deux soupapes s'ouvriront dans la culasse : celle du piston 1 en admission et celle du piston 3 en échappement. Dans le second quart de tour du vilebrequin (90 à 180 degrés) deux soupapes s'ouvriront dans la culasse : celle du piston 3 en admission et celle du piston 4 en échappement. Dans le troisième quart de tour du vilebrequin (180 à 270 degrés) deux soupapes s'ouvriront dans la culasse : celle du piston 4 en admission et celle du piston 2 en échappement. Dans le quatrième quart de tour du vilebrequin (270 à 360 degrés) deux soupapes s'ouvriront dans la culasse : celle du piston 2 en admission et celle du piston 1 en échappement. Ce qui complète le cycle.

### Adaptations.

La distribution directe est conçue pour se coupler aux systèmes de transmission indirecte conventionnels comme alternateur, pompe à eau, climatisation, direction assistée, servo-moteur, ainsi que la pompe à huile. La pompe à huile couplée à la distribution directe est située en dehors du vilebrequin. Cela permet de réduire la taille du carter, la pompe à huile étant située en dehors de celui-ci.

### Conclusion de la description.

Les moteurs à combustion interne actuels usent de divers systèmes de distribution composés : d'arbres à cames, de taquets, de roues de transmission, de chaîne de transmission, d'engrenages, de distribution desmodromique, de roulement mécanique intermédiaire, de distribution par courroie, le système revendiqué ne nécessite aucunement les composants cités *supra.*

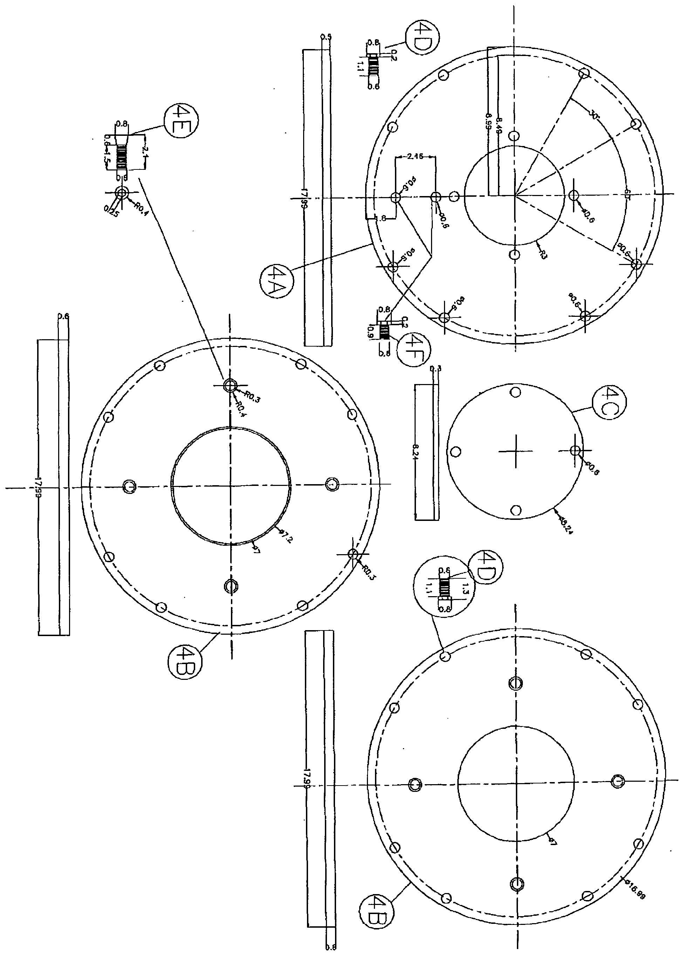

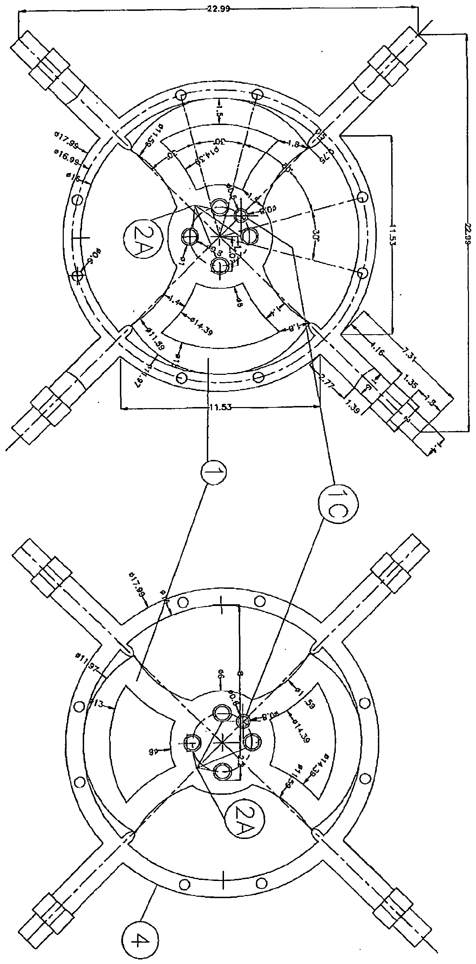

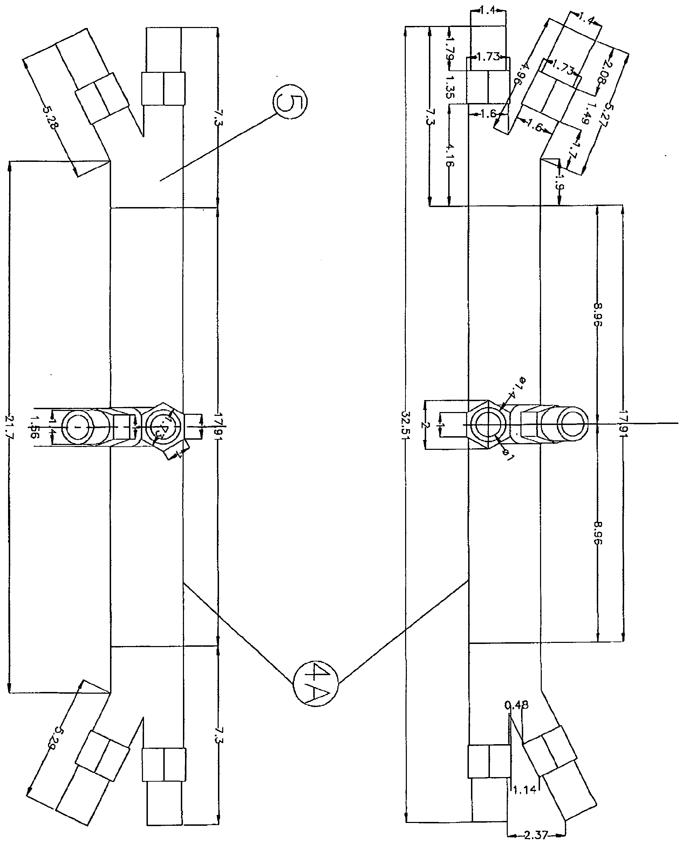

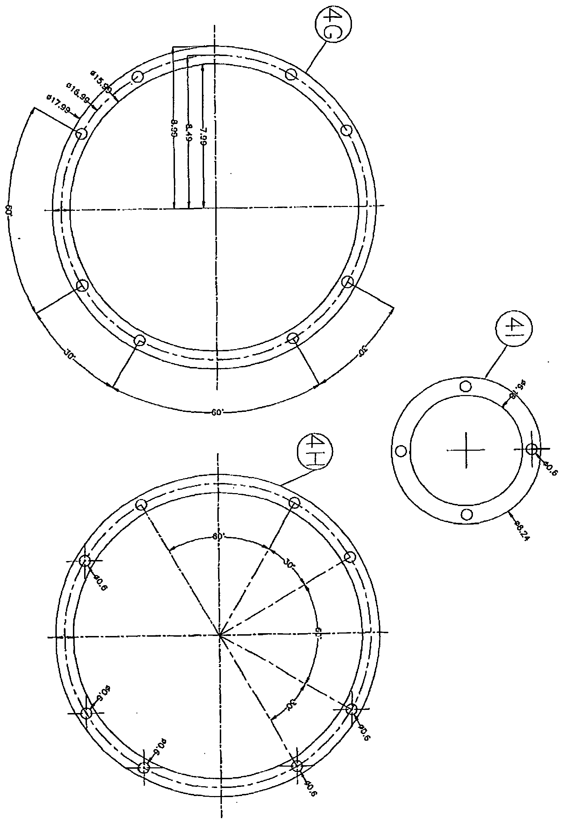

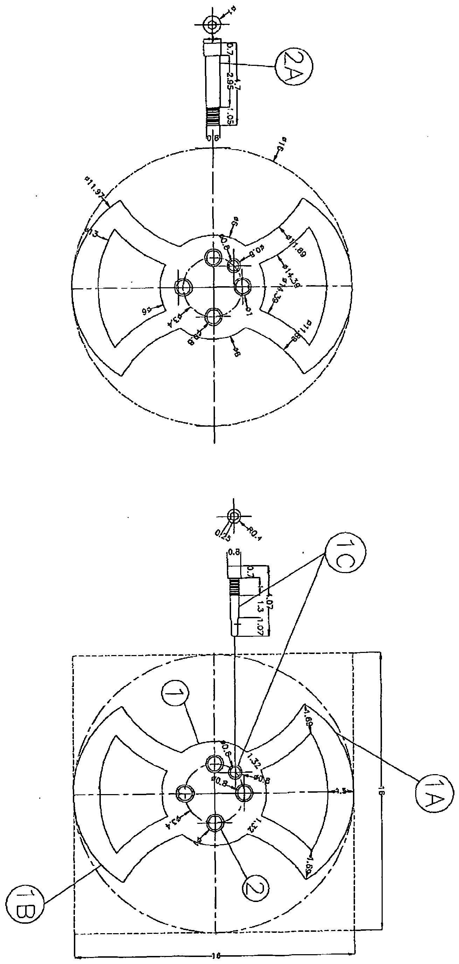

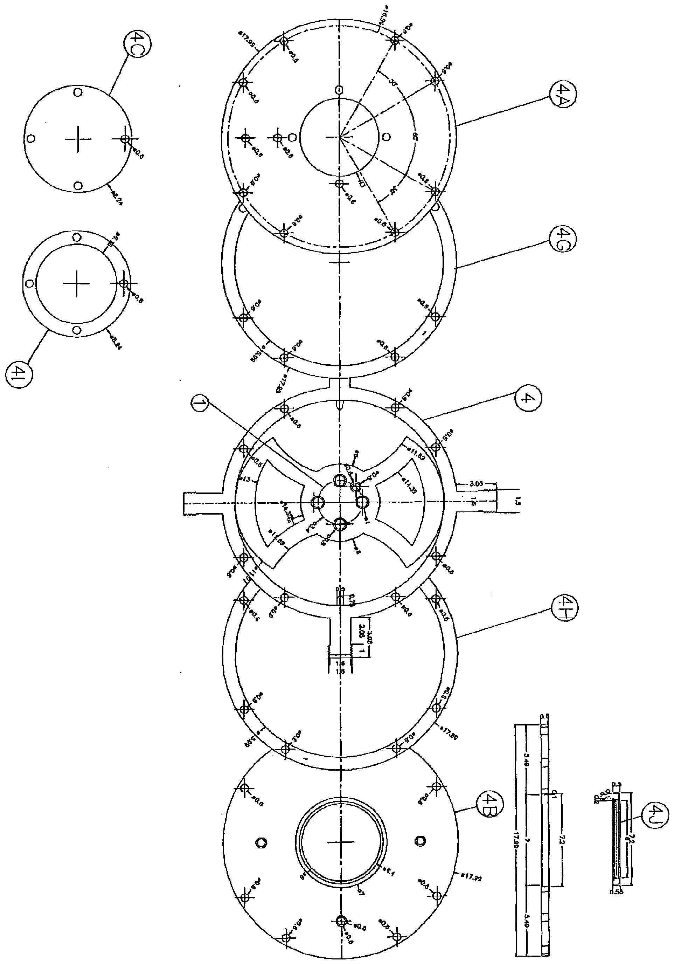

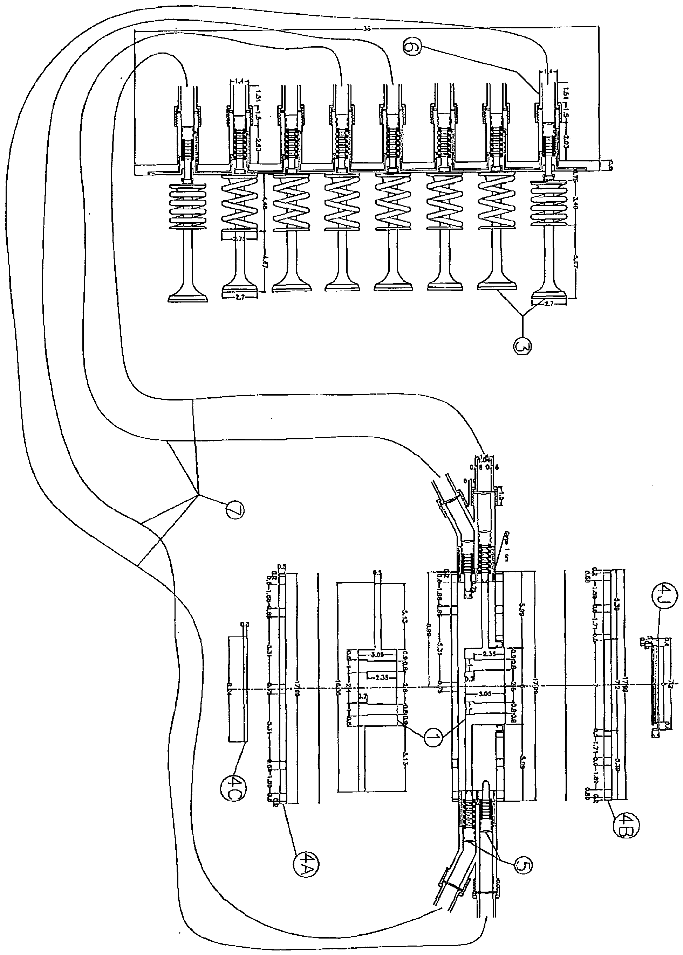

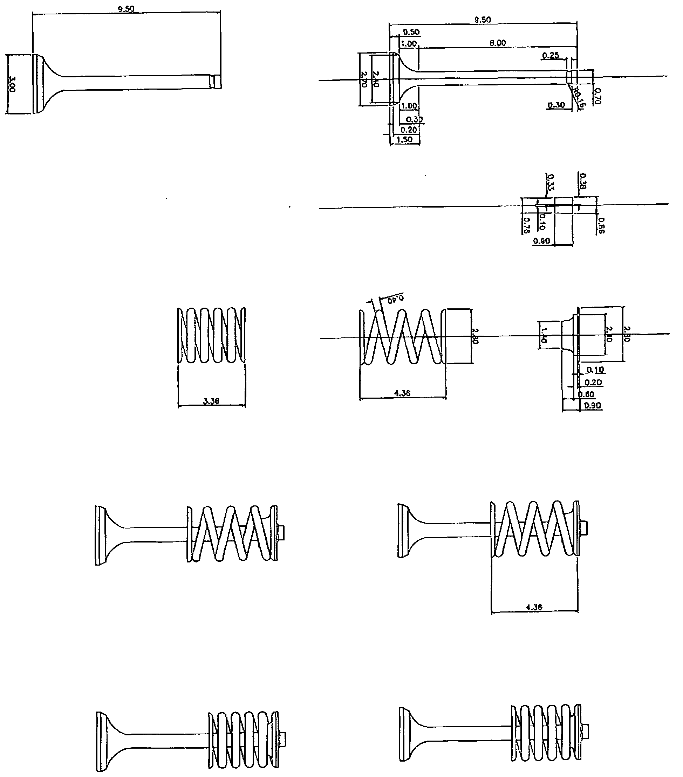

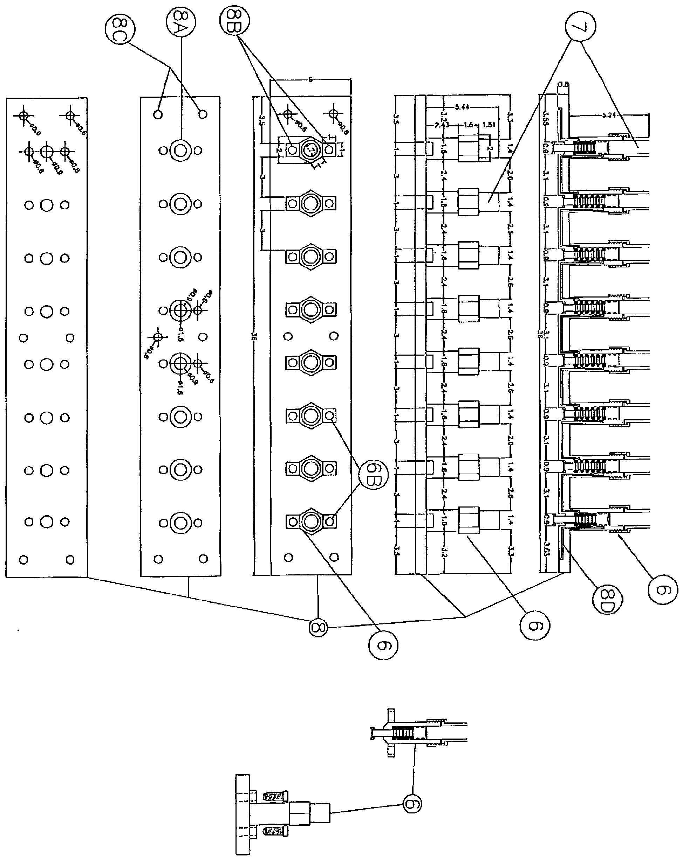

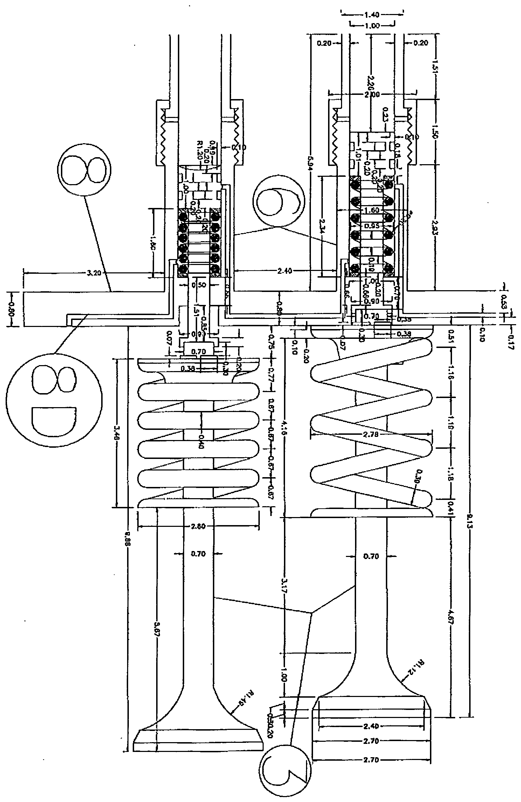

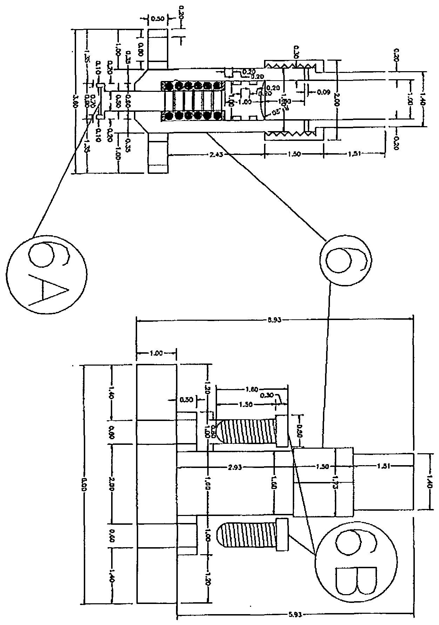

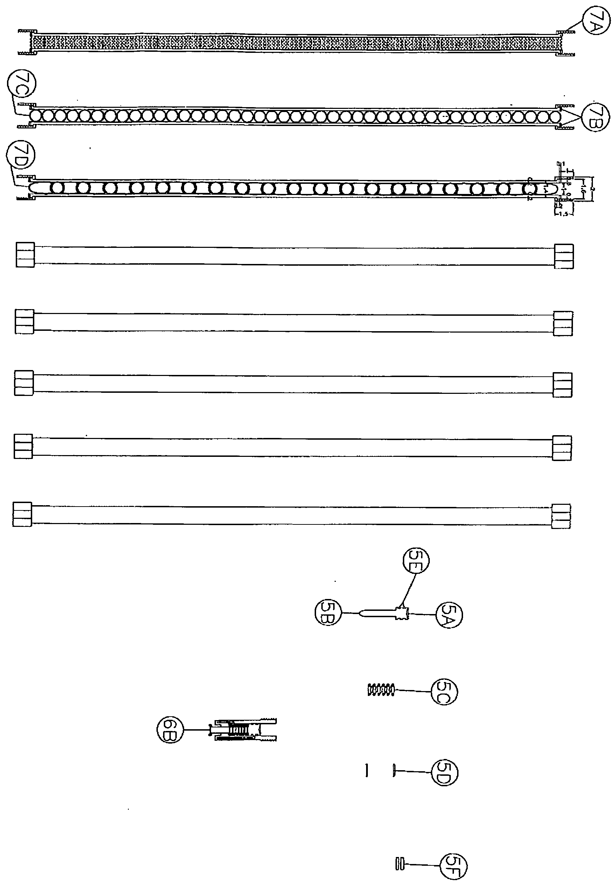

## Revendications

1. Un système de distribution directe applicable à tout moteur de combustion interne qui se **caractérise par** un système de distribution donnant le temps des cylindres en référence directe au mouvement du vilebrequin (2), ce, par un système mécanique attaché au vilebrequin et solidaire du vilebrequin, celui-ci est un rotor (1) contenu dans une enceinte de rotor (4) **caractérisé en ce que** le rotor (1) est connecté aux soupapes (3) par un système mécanique, ce rotor profite du mouvement de rotation du vilebrequin afin de transmettre les temps du moteur aux soupapes, le système mécanique (7) comprend des tubes de transmission d'information et de force (7A) munis d'une rondelle de réglage (7B) et de poussoirs de rotor (5) et de soupape (6), ces dernières fixées sur une réglette (8); le rotor a un guide de réglage à vis (1C) et agit également comme une pompe à huile, le système peut être couplé à tout systèmes de transmissions indirectes conventionnels grâce à un registre (4C).

2. Un système de distribution directe applicable à tout moteur de combustion interne selon la revendication 1 qui comprend comme sous élément un système de transmission d'information **se caractérisant par** un système qui utilise le vilebrequin (2) afin de donner les temps des cylindres, ce par un dispositif directement solidaire et connecté au vilebrequin(2); ce dispositif peut être un rotor (1) attaché et solidaire du vilebrequin (2), connecté aux soupapes (3) par un système mécanique, il profite du mouvement de rotation du vilebrequin (2) afin de transmettre les temps du moteur aux soupapes (3) : dans le système exemplifié chaque quart de tour du vilebrequin (2) ouvrira par le truchement du rotor (1), des tubes de transmissions (7A), et des pousseurs (5) (6), deux soupapes (3) : une en admission et une en échappement, ceci donnant une coordination des temps des cylindres par le mouvement propre du vilebrequin (2) directement attaché au rotor (1).

3. Un système de distribution directe applicable à tout moteur de combustion interne selon la revendication I qui comprend comme sous élément un rotor (1) qui se **caractérise par**: le rotor (1) actionne le mécanisme qui ouvre et ferme les soupapes (3), le rotor (1) est constitué d'un mécanisme fixé directement sur le vilebrequin (2) par quatre boulons passant (2A), le dit mécanisme est composé de deux cames (1A, 1B) superposées, courbées à leurs extrémités où se distribue le mouvement des pistons en référence à l'ouverture des soupapes de culasse (3) par rapport aux temps du moteur (admission, compression, explosion, échappement), la partie de contact des deux cames (1A, 1B) est composé d'un matériau antifriction, le rotor (1) a un guide de réglage à vis (1C), Le rotor (1) agit également comme une pompe à graisse en diffusant par son mouvement l'huile sur les contacts entre lui et les poussoirs de rotor (5), le rotor (1) est contenu dans une enceinte de rotor (4), celle-ci contient les pousseurs de rotor (5), le registre (4C) y est attaché.

4. Un système de distribution directe applicable à tout moteur de combustion interne selon la revendication 1 qui comprend comme sous élément un système de transmission d'information mécanique, composé de tuyaux de transmissions (7) **se caractérisant par** : un tuyau de transmission (7) se compose d'un tube souple (7A) et d'une rondelle de réglage (7B), il y a huit tuyaux de même type, chacune reliant une soupape d'un poussoir de soupapes (6) à un poussoir de rotor (5), Les tuyaux de transmission sont remplis de billes (7C), d'obus (7D).

5. Un système de distribution directe applicable à tout moteur de combustion interne selon la revendication I qui comprend comme sous élément : un système de poussée et de transmission d'information **se caractérisant par** des tuyaux souples ou rigides (7) : pousseur par billes: les tuyaux sont remplis de billes (7C) de diamètre correspondant au diamètre intérieur du tuyau et d'huile ; pousseur par obus : les tuyaux sont remplis d'obus (7D) et de billes (7C) de diamètre correspondants au diamètre intérieur du tuyau et d'huile ; il est possible de concevoir d'autres types et combinaisons d'objets pour remplir les tubes (7A) ; la poussée à deux effets : elle peut donner une information et par ailleurs une force par le mouvement de ce qui emplit les tuyaux (7A) ce dans deux directions opposées, dans le système revendiqué en 1 et 2 l'information est donnée du rotor (1) vers les cylindres et la force ouvre effectivement les soupapes de culasses (3) par l'intermédiaire des pousseurs de soupapes (6), la poussée/force correspondant aux revendications 1 et 2 sur la transmission d'information.

6. Un système de distribution directe applicable à tout moteur de combustion interne selon la revendication 1 qui comprend comme sous élément : des poussoirs de rotor et de soupape qui se caractérisent par : les poussoirs de rotor (5) comprennent un piston (5A), un poussoir (5B), un ressort (5C), deux rondelles (5D) et deux cavités (5E) dans lesquelles sont logés deux segments (5F) la partie de contact du piston du poussoir (5B) est composée d'un matériel antifriction, les poussoirs (5) poussés par le mouvement du rotor donnent la poussée dans le système mécanique de transmission d'information à savoir les tubes de transmissions (7) ; les poussoirs de soupapes (6) sont les mêmes que les poussoirs du rotor (5), la seule différence étant la forme de la tête du poussoir (6A) la partie de contact du poussoir (6A) est composée d'un matériel antifriction ; les pousseurs de soupapes (6) produisent le mouvement des soupapes (3) les ouvrant et fermant afin de provoquer les temps du moteur.

7. Un système de distribution directe applicable à tout moteur de combustion interne selon la revendication 1 qui comprend comme sous élément un système d'adaptation et un registre (4C) **se caractérisant par le fait que** la distribution directe peux se coupler aux systèmes de transmission indirects conventionnels comme alternateur, pompe à eau, climatisation, direction assistée, servo-moteur, ainsi que la pompe à huile ; la pompe à huile couplée à la distribution directe est située en dehors du vilebrequin (2), ceci au moyen d'un registre (4C) servant à attacher la pompe à huile et les systèmes de transmission indirects.

8. Un système de distribution directe applicable à tout moteur de combustion interne selon la revendication I qui comprend comme sous élément un système de réglage/mise au point qui se **caractérise par** une réglette (8) permettant d'ajuster la longueur des tubes de transmissions (7).

9. Tout moteur usant d'un quelconque système revendiqué.

## Patentansprüche

1. Ein direktes Verteilungssystem dass anwendbar auf jede Brennkraftmaschine, welches sich **dadurch kennzeichnet, dass** der Takt der Zylinder in direktem Bezug zur Bewegung der Kurbelwelle (2) steht, und zwar durch ein an der Kurbelwelle angebrachtes mechanisches System, das sich mit dieser dreht; bei diesem mechanischem System handelt es sich um einen Rotor (1), der sich in einer Rotorkammer (4) befindet, dieser Rotor (1) ist **dadurch gekennzeichnet, dass** er mit den Ventilen (3) durch ein weiteres mechanisches System verbunden ist. Dieser Rotor benutzt die Drehbewegung der Kurbelwelle, zur Übertragung des Motortaktes an die Ventile, das mechanische System (7) besteht aus Informations- und Stärkeübertragungsrohren (7A) mit einer Regelscheibe (7B), Rotor Schiebern (5) und einem Ventil (6), wobei die Übertragungsrohre an einer Trägerleiste (8) befestigt sind; der Rotor hat ein Einstellschraube (1C) und wirkt auch als Ölpumpe, das System kann dank eines Registers (4C) an jedes herkömmlichen indirekten Übertragungssysteme gekoppelt werden.

2. Ein direktes Verteilungssystem dass anwendbar auf jede Brennkraftmaschine nach Anspruch 1, das als Subelement ein Informationsübertragungssystem enthält, das sich **dadurch kennzeichnet, dass** es die Kurbelwelle (2) verwendet, um den Takt des Zylinders zu bestimmen, durch eine Vorrichtung, die mit der Kurbelwelle (2) verbunden ist und sich mit ihr dreht; Diese Vorrichtung kann ein Rotor (1) sein, der mit der Kurbelwelle (2) verbunden ist und sich mit ihr dreht und mit den Ventilen (3) durch ein mechanisches System verbunden ist, es benutzt die Rotationsbewegung der Kurbelwellen (2) um den Motortakt auf die Ventile (3) zu übertragen: in dem hier veranschaulichtem System öffnet jede Vierteldrehung der Kurbelwelle (2) durch den Rotor (1), die Übertragungsrohre (7A) und die Schieber (5) (6), zwei Ventile (3): ein Einlass und ein Auslassventil, dies ergibt dann eine Koordination der Zylindertaktung durch die Eigenbewegung der Kurbelwelle (2), die direkt mit dem Rotor (1) verbunden ist.

3. Ein direktes Verteilungssystem dass anwendbar auf jede Brennkraftmaschine nach Anspruch 1, das als Unterelement einen Rotor (1) enthält, der **dadurch gekennzeichnet ist, dass** dieser Rotor (1) den Mechanismus betätigt, der die Ventile (3) öffnet und schließt, der Rotor (1) besteht aus einem Mechanismus der direkt durch 4 Schraubbolzen (2A) mit der Kurbelwelle (2) verbunden ist, dieser Mechanismus besteht aus zwei übereinanderliegenden Nocken (1A, 1B), die an ihren Enden gekrümmt sind, von da aus wird die Bewegung der Kolben, die in direktem Bezug zur Öffnung der ventile (3) steht, die wiederum vom Motortakt (Ansaugen, Verdichten, Explosion, Ausstoßen) bestimmt wird, übertragen, der Kontaktbereich der beiden Nocken (1A, 1B) besteht aus einem Verschleissfreies Material, der Rotor (1) hat eine Einstellschraube (1C), der Rotor (1) wirkt auch als Ölpumpe, in dem er durch seine Bewegung das Öl auf die Kontaktfläche zwischen ihm und den Rotorschiebern (5) verteilt, der Rotor (1) befindet sich in einer Rotorkammer (4), diese enthält auch die Rotorschieber (5), das Register (4C) ist an der Rotorkammer befestigt.

4. Ein direktes Verteilungssystem dass anwendbar auf jede Brennkraftmaschine nach Anspruch 1, das als Unterelement ein mechanisches Informationsübertragungsystem enthält, dieses besteht aus Übertragungsrohren (7), die wiederum aus einem flexiblen Rohr (7a) und eine Regelscheibe (7B) bestehen, es gibt acht gleichwertige Röhre, jede verbindet ein Ventil eines Ventilstößels (6) mit einem Rotorschieber (5), die Übertragungsrohr sind mit Kugeln (7C), oder Kugeln mit furhung (7D) gefüllt.

5. Ein direktes Verteilungssystem dass anwendbar auf jede Brennkraftmaschine nach Anspruch 1, dass als Unterelement ein Schub- und Übermittlungssystem umfasst, das aus flexible oder starre Röhren (7) besteht: Verschiebung durch Kugeln: die Rohre sind mit Kugeln (7C) mit einem Durchmesser entsprechend dem Innendurchmesser des Rohres und Öl gefüllt; Verschiebung durch Kugeln mit furhung: die Rohre mit Kugeln mit furhung (7D) und Kugeln (7C) mit einem Durchmesser entsprechend dem Innendurchmesser des Rohres und Öl gefüllt; es ist möglich, andere Typen und Kombinationen von Objekten für die Befüllung der Röhren (7A) zu entwickeln; Das Schieben hat zwei Effekte: Es kann durch die Bewegung des Füllgutes (7A) eine Information und auch eine Kraft übertragen und das in den beiden entgegengesetzten Richtungen, in dem System das in 1 und 2 beschrieben ist, wird die Information des Rotors (1) auf die Zylindern übertragen und die Kraft öffnet das Ventil (3) durch den Ventilschieber (6), der Schub / die Kraft entspricht den Ansprüchen 1 und 2 zur Übertragung von Informationen.

6. Ein direktes Verteilungssystem dass anwendbar auf jede Brennkraftmaschine nach Anspruch 1, das als Unterelement umfasst: Rotorschieber und Ventil: die Rotorschieber (5) bestehen aus einem Kolben (5A), einem Schieber (5B), einer Feder (5C), zwei Unterlegscheiben (5D) und zwei Aussparungen (5E), in denen zwei Segmenten (5F) untergebracht sind, die Kontaktabschnitte mit den Kolben des Schiebers (5B), der aus Verschleissfreies Material ist, die Schieber (5) durch die Bewegung des Rotors angeschoben liefert den Schub im mechanischen Informationsübertrangungssystem, den Übertragungsrohren (7); die Ventilstößel (6) gleichen den Rotorschiebern, der einzige Unterschied ist die Form des Kopfes des Schiebers (6A) dem Kontaktabschnittes der Schiebers (6A), der aus Antifriktionsmaterial hergestellt ist; die Ventilstößel (6) erzeugen die Bewegung der Ventile (3), öffnen und schließen die Ventile, um die von der Motortaktung durchgefuhrt wird.

7. Ein direktes Verteilungssystem dass anwendbar auf jede Brennkraftmaschine nach Anspruch 1, die als Unterelement ein Adaptersystem und ein Register (4C) enthält, diese sind **dadurch gekennzeichnet, dass** das direkte Verteilsystem mit jedem herkömmlichen indirekten Übertragungssysteme gekoppelt werden kann, wie der Lichtmaschine, der Wasserpumpe, der Klimaanlage, der Servolenkung, dem elektrischer Motor und auch der Ölpumpe; die Kopplung der Ölpumpe mit dem direkten Verteilungssystem befindet sich außerhalb der Kurbelwelle (2), sie erfolgt mittels eines Registers (4C), die dazu dient die Ölpumpe mit dem indirekten Übertragungssysteme zu verbinden.

8. Ein direktes Verteilungssystem dass anwendbar auf jede Brennkraftmaschine nach Anspruch 1, das als Unterelement ein Reglungs-/Fokussierungssystem enthält, das durch eine Trägerleiste (8) gekennzeichnet ist, diese dient dazu die Länge der Übertragungsröhren (7) anzupassen.

9. Jeder Motor der irgendein hier beschriebenes System benutzt.

## Claims

1. A direct timing system applicable to any internal combustion engine **characterized by** a timing system giving the timing of the cylinders with direct reference to the movement of the crankshaft (2) by means of a mechanical system attached to the crankshaft and integral with the crankshaft, the latter system is a rotor (1) contained in a rotor casing (4) **characterized in that** the rotor (1) is connected to the cylinders valves (3) by a mechanical system, this rotor take advantage of the rotating movement of the crankshaft in order to transmit the times of the engine to the cylinder valves, the mechanical system (7) include information and force transmission tubes (7A) provided with an adjuster washer (7B), rotor pushers (5) and valve pushers (6), the later are fixed to a strip (8); the rotor has a screw type adjustment guide (1C) and also acts as a lubrication pump, the system can be coupled to any conventional indirect transmission systems by means of a register (4C).

2. A direct timing system applicable to any internal combustion engine according to claim 1 that includes as a subsystem an information transmission system **characterized by** a system that uses the crankshaft (2) in order to give the times of the cylinders, by means of a dispositive directly integral and connected to the crankshaft (2); that dispositive may be a rotor (1) directly fastened to and integral to the crankshaft (2), connected to the valves (3) by a mechanical system, it exploits the rotation movement of the crankshaft (2) to transmit the engine timing to the valves (3): in the exemplified system each quarter-turn of the crankshaft (2) will open via the rotor (1), the transmission tubes (7A) and the pushers (5) (6), two valves (3): one intake valve and one exhaust valve, thus giving a coordination of the times of the cylinders by the own motion of the crankshaft (2) to which the rotor (1) is directly attached.

3. A direct timing system applicable to any internal combustion engine according to claim 1 that includes as a subsystem a rotor (1) **characterized by**: the rotor (1) actuates the mechanism that opens and closes the valves (3), the rotor (1) consists of a mechanism fixed directly to the crankshaft (2) by four through-bolts (2A), said mechanism is made up of two superposed cams (1A, 1B) curved at their ends where the movement of the pistons is timed with reference to the opening of the cylinder head valves (3) relative to the engine timing (intake, compression, power, exhaust), the contact portion of the two cams (1A, 1B) consists of an antifriction material, the rotor (1) has a screw type adjustment guide (1C), the rotor (1) also acts as a lubrication pump by virtue of its movement distributing oil onto the areas of contact between it and the rotor pushers (5), the rotor (1) is contained in a rotor casing (4), the latter contains the rotor pushers (5), the register (4C) is attached to it.

4. A direct timing system applicable to any internal combustion engine according to claim 1 that includes as a subsystem a mechanical information transmission system, comprising transmission tubes (7), **characterized by**: a transmission tube (7) consists of a flexible tube (7A) and an adjuster washer (7B); there are eight tubes of the same type, each connecting a valve of a valve pusher (6) to a rotor pusher (5), the transmission tubes are filled with balls (7C), bullet-shaped members (7D).

5. A direct timing system applicable to any internal combustion engine according to claim 1 that includes as a subsystem: a pusher and information transmission system **characterized by** flexible or rigid tubes (7): ball pusher: the tubes are filled with oil and balls (7C) having a diameter corresponding to the inside diameter of the tubes; bullet pusher: the tubes are filled with oil and bullet-shaped members (7D) and balls (7C) having a diameter corresponding to the inside diameter of the transmission tubes; it is possible to conceive of other types and combinations of objects for filling the tubes (7A); the pushing has two effects: she may give an information and moreover a force by virtue of the movement of what fills the tubes (7A) in two opposite directions; in the system claimed in claim 1 and 2 the information is given by the rotor (1) toward the cylinders and the force actually opens the cylinder head valves (3) via the valve pushers(6), the push/force corresponding to claim 1 and 2 on information transmission.

6. A direct timing system applicable to any internal combustion engine according to claim 1 that includes as a subsystem: rotor pushers and valve pushers **characterized by**: the rotor pushers (5) include a piston (5A), a pusher (5B), a spring (5C), two washers (5D) and two cavities (5E) in which are housed two piston rings (5F), the contact portion of the piston of the pusher (5B) is made of an antifriction material, the pushers (5) pushed by the movement of the rotor give the push in the mechanical system of transmission of information which is the transmission tubes (7); the valve pushers (6) are the same as the rotor pushers (5), the only difference being the shape of the head of the pusher (6A) the contact portion of the pushers (6A) is made of an antifriction material; the valve pushers (6) produce the movements of the valves (3) opening and closing them in order to produce the engine timing.

7. A direct timing system applicable to any internal combustion engine according to claim 1 that includes as a subsystem an adapter system and a register (4C) **characterized by** the fact that the direct timing system can be coupled to conventional indirect transmission systems such as alternator, water pump, air-conditioner, power steering, servomotor and the oil pump; the oil pump coupled to the direct timing system is situated off the crankshaft (2) by means of a register (4C) used to attach the oil pump and the indirect transmission systems.

8. A direct timing system applicable to any internal combustion engine according to claim 1 that includes as a subsystem an adjustment/tuning system **characterized by** a strip (8) which allows adjust the length of the transmission tubes (7).

9. Any engine using any of the claimed systems.
